# EUROPÄISCHE PATENTSCHRIFT

(11) **EP 2 857 455 B1**
(45) Veröffentlichungstag und Bekanntmachung des Hinweises auf die Patenterteilung: **30.05.2018**
(21) Anmeldenummer: 14177536.1
(22) Anmeldetag: 17.07.2014
(51) Int. Cl.: C08L 77/06

(54) **Polyamid-Formmassen enthaltend Cycloolefin-Copolymere**
Polyamide moulding compositions containing cycloolefin copolymers
Masses moulées en polyamide contenant des copolymères de cyclooléfine

(30) Priorität: 03.10.2013 EP 13187259
(43) Veröffentlichungstag der Anmeldung: 08.04.2015
(73) Patentinhaber: EMS-PATENT AG, 7013 Domat / Ems (CH)
(72) Erfinder: Hoffmann, Botho, 7013 Domat/Ems (CH); Sütterlin, Martin, 7000 Chur (CH); Bass, Sepp, 7013 Domat/Ems (CH)
(74) Vertreter: OK pat AG

(56) Entgegenhaltungen:
- DD-A1- 203 060
- JP-A- 2011 057 864

## Beschreibung

Die vorliegende Erfindung betrifft transparente Polyamid-Formmassen enthaltend Cycloolefin-Copolymere, sowie deren Verwendung.

Polyamid-Formmassen mit Cycloolefin-Copolymeren sind bekannt aus der Patentschrift DD 203 060 A. Dort sind Thermoplastkombinationen auf Basis von Norbornen/Ethylen-Copolymeren und Polyamiden mit etwa gleich grossen Mengenanteilen der beiden Polymere beschrieben. Als geeignete Polyamide werden aliphatische Polyamide, Polyamide mit cycloaliphatischen Kettenbausteinen, aliphatisch-aromatische Polyamide und/oder aromatische Polyamide genannt, meist mit konkreten Verbindungen als Beispiel. Transparenz gehört nicht zu den Anforderungen an die beschriebenen Polyamid-Formmassen. Die optischen Eigenschaften jener Polyamid-Formmassen werden nicht offenbart.

In JP 2011-057864 A werden Formmassen offenbart, die auf Cycloolefin-Copolymeren als Hauptkomponente basieren und eine im Verhältnis dazu geringere Menge eines zugemischten aliphatischen Polyamids enthalten. Die dort beanspruchten Cycloolefin-Copolymere weisen eine Glasübergangstemperatur Tg von 50 °C bis maximal 100 °C auf. Es werden aliphatische Polyamide mit einem Anteil von mindestens 50 Mol-% Lactam- oder Aminocarbonsäure-Einheiten verwendet. Die Transparenz dieser Zusammensetzungen ist nur gering, denn es wird lediglich eine visuelle Kontakt-Transparenz angegeben.

In der Broschüre "TOPAS Cycloolefin Copolymer (COC)" des COC-Herstellers TOPAS Advanced Polymers, Ausgabe vom Mai 2007, werden Cycloolefin-Copolymere als Copolymerisationsprodukt aus dem bicyclischen Olefin Norbornen und Ethylen genauer beschrieben. Es wird die gute Verträglichkeit von COC mit Polyolefinen zur Herstellung von Blends erwähnt und explizit darauf hingewiesen, dass das Zumischen von fremden auch transparenten Thermoplasten zu COC zu einer starken Trübung führt. Bei der Bezeichnung TOPAS handelt es sich um ein eingetragenes Warenzeichen.

Polyamide weisen im Vergleich zu anderen Thermoplasten die Besonderheit auf, dass sie je nach Typ eine gewisse Menge Wasser aus der Umgebungsfeuchte aufnehmen, wodurch sich das Volumen bzw. die Dimensionen daraus gefertigter Formteile oder Beschichtungen oder gewisse mechanische Eigenschaften der daraus gefertigten Formteile oder Beschichtungen verändern können. Dies gilt auch für transparente Polyamide.

Zur Erzielung einer guten Dimensionsstabilität und konstanterer mechanischer Eigenschaften ist es wünschenswert, die Wasseraufnahme einer Polyamid-Formmasse gering zu halten. Dazu kann das Polyamid z.B. mit anderen Komponenten gemischt werden. Bei transparenten Polyamiden wirken sich diese Komponenten jedoch meist negativ auf die optischen Eigenschaften, d.h. die Lichttransmission und den Haze (Trübung) der resultierenden Polyamid-Formmasse aus.

Somit ergab sich als Aufgabe für die vorliegende Erfindung, eine transparente Polyamid-Formmasse auf Basis eines Polyamids zur Verfügung zu stellen, die gegenüber dem unmodifizierten Polyamid eine verringerte Wasseraufnahme zeigt, und die trotz der weiteren Formmassen-Komponenten immer noch gute optische Eigenschaften, d.h. eine hohe Lichttransmission und einen niedrigen Haze aufweist.

Diese Aufgabe wird gemäss der vorliegenden Erfindung mit einer Polyamid-Formmasse mit den Merkmalen von Anspruch 1 gelöst.

Die erfindungsgemässe transparente Polyamid-Formmasse enthält ein Polyamid als Hauptkomponente und entgegen der Aussage in der TOPAS-Broschüre, d.h. zur völligen Überraschung des Fachmanns, mindestens ein Cycloolefin-Copolymer.

An dieser Stelle soll darauf hingewiesen werden, dass der Begriff "Polyamid" ein Oberbegriff ist, der Homopolyamide und Copolyamide sowie Mischungen davon umfasst. Die Schreibweisen und Abkürzungen für Polyamide und deren Monomere sind in der ISO-Norm 1874-1:1992(E) festgelegt.

Eine erfindungsgemässe transparente Polyamid-Formmasse enthaltend mindestens ein Cycloolefin-Copolymer umfasst eine Mischung von:
(A) 55 bis 99 Gew.-% mindestens eines amorphen Polyamids;
(B) 1 bis 30 Gew.-% des mindestens einen Cycloolefin-Copolymers, wobei bei dem mindestens einen Cycloolefin-Copolymer (B) der Cycloolefin-Anteil mehr als 40 Mol-% beträgt; und
(C) 0 bis 15 Gew.-% mindestens eines Zusatzstoffs;
wobei die Summe der Komponenten (A) bis (C) 100 Gew.-% der Polyamid-Formmasse beträgt;
wobei diese Polyamid-Formmasse eine Lichttransmission gemessen nach der Norm ASTM D 1003 aufweist, die mindestens 80 % beträgt;
und wobei die Polyamid-Formmasse einen Haze gemessen nach der Norm ASTM D 1003 aufweist, der maximal 30 % beträgt.

Die beiden genannten optischen Eigenschaften müssen erfüllt sein, damit eine Polyamid-Formmasse in den beanspruchten Bereich fällt. Enthält die Polyamid-Formmasse keinen Zusatzstoff (C), so ergeben die Komponenten (A) und (B) zusammen 100 Gew.-%. Ist ein Zusatzstoff (C) vorhanden, so ist die Summe von (A) und (B) entsprechend dem Anteil der Komponente (C) kleiner als 100 Gew.-%.

Bevorzugte Ausführungsformen der erfindungsgemässen transparenten Polyamid-Formmasse ergeben sich aus den abhängigen Ansprüchen. Zudem wird die Verwendung dieser Polyamid-Formmasse beansprucht.

Amorphe Polyamide zeigen in der dynamischen Differenz-Kalorimetrie (engl. Differential Scanning Calorimetry, DSC) nach ISO 11357 bei einer Aufheizrate von 20 K/min eine Schmelzwärme von maximal 5 J/g, bevorzugt von maximal 3 J/g, besonders bevorzugt von 0 bis 1 J/g.

Die Komponenten (A) und (B) liegen in der erfindungsgemässen Polyamid-Formmasse bevorzugt in einem Anteil von:
(A) 60 bis 97 Gew.-% und (B) 3 bis 25 Gew.-%;
besonders bevorzugt in einem Anteil von:
(A) 62 bis 96 Gew.-% und (B) 4 bis 23 Gew.-%;
und ganz besonders bevorzugt in einem Anteil von:
(A) 72 bis 96 Gew.-% und (B) 4 bis 13 Gew.-% vor.

Bevorzugt enthält das mindestens eine amorphe Polyamid (A) mindestens ein cycloaliphatisches Diamin, welches besonders bevorzugt ausgewählt ist aus einer Gruppe die aus Bis(aminocyclohexyl)methan und seinen Alkylderivaten besteht. Unter letzteren wird Bis(aminocyclohexyl)methan mit Alkyl-Substituenten verstanden.

Ganz besonders bevorzugt ist das mindestens eine cycloaliphatische Diamin ausgewählt aus einer Gruppe die aus Bis(4-amino-cyclohexyl)methan, Bis(3-methyl-4-amino-cyclohexyl)methan und Bis(3,5-dimethyl-4-amino-cyclohexyl)methan besteht.

In einer weiteren bevorzugten Ausführungsform der erfindungsgemässen transparenten Polyamid-Formmasse ist bei dem mindestens einen amorphem Polyamid (A) Hexamethylendiamin als Monomer ausgeschlossen und/oder bei dem mindestens einen Cycloolefin-Copolymer (B) beträgt der Cycloolefin-Anteil bevorzugt mehr als 40 Mol-%.

In einer bevorzugten Ausführungsform umfasst die erfindungsgemässe transparente Polyamid-Formmasse enthaltend mindestens ein Cycloolefin-Copolymer eine Mischung von:
(A) 55 bis 99 Gew.-% mindestens eines amorphen Polyamids, wobei jeweils Hexamethylendiamin als Monomer ausgeschlossen ist;
(B) 1 bis 30 Gew.-% mindestens eines Cycloolefin-Copolymers, wobei jedes Cycloolefin-Copolymer einen Cycloolefin-Anteil von mehr als 40 Mol-% aufweist; und
(C) 0 bis 15 Gew.-% mindestens eines Zusatzstoffs;
wobei die Summe der Komponenten (A) bis (C) 100 Gew.-% der Polyamid-Formmasse beträgt;
wobei diese Polyamid-Formmasse eine Lichttransmission gemessen nach der Norm ASTM D 1003 aufweist, die mindestens 80 % beträgt;
und wobei die Polyamid-Formmasse einen Haze gemessen nach der Norm ASTM D 1003 aufweist, der maximal 30 % beträgt.

Die relative Viskosität (RV) des mindestens einen amorphen Polyamids (A) der erfindungsgemässen Polyamid-Formmasse beträgt vorzugsweise 1,40 bis 2,15, besonders bevorzugt 1,45 bis 1,85, und ganz besonders bevorzugt 1,50 bis 1,75, gemessen mit 0,5 g Polyamid in 100 ml m-Kresol bei 20°C.

Das mindestens eine amorphe Polyamid (A) der erfindungsgemässen Polyamid-Formmasse ist bevorzugt mindestens ein amorphes Copolyamid (A).

Vorzugsweise enthält das amorphe Copolyamid (A) Laurinlactam als Monomer, und weist einen Laurinlactam-Gehalt auf, der 10 bis 45 Mol-%, besonders bevorzugt 15 bis 40 Mol-%, und ganz besonders bevorzugt 20 bis 40 Mol-%, bezogen auf die molare Summe aller Monomeren, beträgt.

Bevorzugt enthält das amorphe Copolyamid (A) das cycloaliphatische Diamin Bis(3-methyl-4-amino-cyclohexyl)methan (MACM) als Monomer. Besonders bevorzugt enthält das amorphe Copolyamid (A) MACMI-Wiederholungseinheiten, aufgebaut aus Bis(3-methyl-4-amino-cyclohexyl)methan (MACM) und Isophthalsäure (I).

In einer bevorzugten Ausführungsform handelt es sich bei dem amorphen Copolyamid (A) um ein PA MACMI/12, aufgebaut aus den Monomeren Bis(3-methyl-4-amino-cyclohexyl)methan (MACM), Isophthalsäure (I) und Laurinlactam (12). Speziell bevorzugt besitzt das PA MACMI/12 das Molverhältnis 65/35.

In einer weiteren bevorzugten Ausführungsform handelt es sich bei dem amorphen Copolyamid (A) um ein PA MACMI/MACMT/12, aufgebaut aus den Monomeren Bis(3-methyl-4-amino-cyclohexyl)methan (MACM), Isophthalsäure (I), Terephthalsäure (T) und Laurinlactam (12).

Unter den PA MACMI/MACMT/12 sind diejenigen mit einem equimolaren Verhältnis von Isophthalsäure zu Terephthalsäure bevorzugt. Speziell bevorzugt besitzt das PA MACMI/MACMT/12 das Molverhältnis 38/38/24.

Das mindestens eine Cycloolefin-Copolymer (B) ist aus mindestens einem cyclischen Olefin und mindestens einem linearen oder verzweigten Olefin aufgebaut, wobei der Cycloolefin-Anteil jeweils mehr als 40 Mol-%, bevorzugt 45 bis 75 Mol-%, besonders bevorzugt 47 bis 70 Mol-%, und ganz besonders bevorzugt 52 bis 68 Mol-% beträgt. Bevorzugte cyclische Olefine sind Norbornen, substituierte Norbornene, Norbornenderivate oder Tetracyclododecen. Bei den Substituenten kann es sich um Alkyl- oder Arylgruppen handeln. Bei den linearen oder verzweigten Olefinen sind lineare Olefine bevorzugt, insbesondere Ethen und Propen. Eingesetzt werden können eines, zwei oder mehrere Cycloolefin-Copolymere. Mehr als ein Cycloolefin-Copolymer liegt auch dann vor, wenn die Cycloolefin-Copolymere zwar aus denselben Monomeren bestehen, sich der Cycloolefin-Anteil jedoch quantitativ unterscheidet.

Das mindestens eine Cycloolefin-Copolymer (B) weist eine Glasübergangstemperatur (Tg) auf, die bevorzugt höher als 100 °C ist. Besonders bevorzugt liegt die Glasübergangstemperatur des mindestens einen Cycloolefin-Copolymers (B) im Bereich von 110 °C bis 220 °C, ganz besonders bevorzugt im Bereich von 120 °C bis 210 °C.

Das mindestens eine Cycloolefin-Copolymer (B) weist einen Cycloolefin-Anteil auf, der mehr als 40 Mol-%, bezogen auf die molare Summe aller Monomeren, beträgt. Bevorzugt beträgt der Cycloolefin-Anteil des Cycloolefin-Copolymers 43 bis 75 Mol-%, besonders bevorzugt 47 bis 70 Mol-%, und ganz besonders bevorzugt 52 bis 68 Mol-%.

Das mindestens eine Cycloolefin-Copolymer (B) kann funktionelle Gruppen enthalten, die dessen Verträglichkeit mit dem mindestens einen amorphen Polyamid (A) erhöhen. Geeignete funktionelle Gruppen sind z.B. Acrylsäure, Bernsteinsäureanhydrid, Glycidylmethacrylat und/oder Maleinsäureanhydrid.

Vorzugsweise besteht das mindestens eine Cycloolefin-Copolymer (B) aus Norbornen und/oder Norbornenderivaten und Ethen.

Besonders bevorzugt besteht das mindestens eine Cycloolefin-Copolymer (B) aus Norbornen und Ethen, und ist somit ein Norbornen/Ethen-Copolymer.

In einer bevorzugten Ausführungsform enthält die transparente Polyamid-Formmasse mindestens einen Zusatzstoff (C). Der Anteil des mindestens einen Zusatzstoffes (C) beträgt bevorzugt 0.1 bis 6 Gew.-%, besonders bevorzugt 0.1 bis 4 Gew.-%. Vorzugsweise beträgt die Menge eines einzelnen Zusatzstoffes nicht mehr als 3 Gew.-%.

Bevorzugt ist der mindestens eine Zusatzstoff (C) ausgewählt ist aus der Gruppe bestehend aus Stabilisatoren, Gleitmitteln, Farbstoffen, Markierungsstoffen, Verträglichkeitsvermittlern, anorganischen Pigmenten, organischen Pigmenten, Antistatika, Antiblockmitteln, Trennmitteln, Entformungsmitteln, optischen Aufhellern, photochromen Additiven, halogenfreien Flammschutzmitteln, metallischen Pigmenten, Metallflittern, metallbeschichteten Partikeln, Füllstoffen, nanoskaligen Füllstoffen und Mischungen davon.

Sowohl die Füllstoffe als auch die nanoskaligen Füllstoffe können oberflächenbehandelt, aber auch unbehandelt sein. Bei den nanoskaligen Füllstoffen handelt es sich bevorzugt um Minerale mit einer Partikelgrösse von maximal 100 nm oder um natürliche oder synthetische Phyllosilikate oder Mischungen davon. Als Phyllosilikate können in den erfindungsgemässen Polyamid-Formassen z.B. Kaoline, Serpentine, Talkum, Glimmer, Vermiculite, Muscovite, Illite, Smectite, Saponite, Montmorillonit, Hectorit, Doppelhydroxide oder Gemische davon eingesetzt werden.

Bei den Stabilisatoren handelt es sich vorzugsweise um organische oder anorganische Stabilisatoren, die ausgewählt sind aus der Gruppe der Antioxidantien, Antiozonantien, Lichtschutzmittel, UV-Stabilisatoren, UV-Absorber und UV-Blocker. In einer bevorzugten Ausführungsform enthält die erfindungsgemässe, transparente Polyamid-Formmasse mindestens einen Stabilisator als Zusatzstoff (C).

Erfindungsgemässe Polyamid-Formmassen weisen eine Lichttransmission auf, die gemessen nach der Norm ASTM D 1003, mindestens 80 %, bevorzugt mindestens 85 %, besonders bevorzugt mindestens 88 %, und ganz besonders bevorzugt mindestens 90 % beträgt. Erfindungsgemässe Polyamid-Formmassen weisen zudem einen Haze auf, der gemessen nach der Norm ASTM D 1003, maximal 30 %, bevorzugt maximal 25 %, besonders bevorzugt maximal 20 %, und ganz besonders bevorzugt maximal 15 % beträgt.

Erfindungsgemässe transparente Polyamid-Formmassen, enthaltend Cycloolefin-Copolymer, bei denen das mindestens eine Copolyamid (A) ein PA MACMI/12 ist, zeigen eine Wasseraufnahme gemessen an Platten nach der ISO-Norm 62 von weniger als 4 Gew.-%. Bei unmodifiziertem PA MACMI/12 beträgt die Wasseraufnahme hingegen 4 Gew.-%.

Die bevorzugt in Granulatform vorliegenden erfindungsgemässen Polyamid-Formmassen können für Beschichtungen von Objekten oder zur Herstellung von Formkörpern, insbesondere durch Extrusion oder Spritzguss, verwendet werden.

Die Beschichtungen oder Formkörper sind vor allem zur Verwendung in den Bereichen Elektro und Elektronik, Telekom, Optik, Photovoltaik und Automobil-Innenraum geeignet. Bei den Formkörpern handelt es sich bevorzugt um Linsen, Brillenrahmen, Brillenfassungen, Brillenteile, Sichtfenster, Visiere, Filtertassen, Durchflussmesser, Verschlüsse, Abdeckungen, Instrumentenabdeckungen, Tasten, Gehäuse oder Gehäuseteile, insbesondere für tragbare elektrische bzw. elektronische Geräte. Bei den Beschichtungen handelt es sich vorzugsweise um Schutzschichten für z.B. Displays, optische Filter, Funktions- oder Dekorteile im Automobilinnenraum oder die Vorderseite von Photovoltaikmodulen. Bevorzugt werden die erfindungsgemässen Polyamid-Formmassen zur Herstellung von Formkörpern durch Spritzgiessen verwendet.

### Herstellung einer erfindungsgemässen Polyamid-Formmasse:

Die nachfolgende Beschreibung einer beispielhaften Herstellung dient zur Illustration, soll aber den Erfindungsumfang nicht einschränken.

Zur Herstellung der Polyamid-Formmasse werden die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe verwendet, können diese direkt oder in Form eines Masterbatches eingebracht werden. Bei dem Trägermaterial des Masterbatches handelt es sich bevorzugt um ein Polyolefin oder ein Polyamid. Unter den Polyamiden eignen sich besonders PA 6, PA 11, PA 12, PA 6/12 oder PA MACMI/12.

Zur Dryblend-Herstellung werden die getrockneten Granulate und gegebenenfalls weitere Zusatzstoffe (Additive) vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 295 °C. Vor der Düse kann Vakuum angelegt oder atmosphärisch entgast werden. Die Schmelze wird in Strangform ausgetragen, im Wasserbad bei 10 bis 80 °C abgekühlt und anschliessend granuliert. Das Granulat wird für 12 bis 24 Stunden bei 80 bis 120 °C unter Stickstoff oder im Vakuum auf einen Wassergehalt von unter 0.1 Gew.-% getrocknet. Bevorzugt wird zum Granulieren eine Unterwassergranulierung oder ein Heissabschlag verwendet.

### Herstellung der Prüfkörper aus den erfindungsgemässen Polyamid-Formmassen:

Die Prüfkörper wurden auf einer Spritzgussmaschine der Firma Arburg, Modell Allrounder 420 C 1000-250 hergestellt. Dabei wurden aufsteigende Zylindertemperaturen von 230 °C bis 295 °C verwendet. Die Formtemperatur betrug 80 °C. Bei den Platten für die Messung der Lichttransmission und des Hazes wurden hochglanzpolierte Formen verwendet.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

### Die Messungen wurden nach den folgenden Normen und an den folgenden Prüfkörpern durchgeführt:

Relative Viskosität (RV):
ISO 307
Granulat
0,5 g in 100 ml m-Kresol gelöst
Messtemperatur 20 °C
Berechnung der relativen Viskosität (RV) nach RV = t/t₀ in Anlehnung an Abschnitt 11 der Norm.

Fliessindex MVR (Melt Volume Rate):
ISO 1133
Granulat
Messtemperatur 260 °C
Belastung 2.16 kg
Angabe in ml/10 min bzw. cm³/10 min

Glasübergangstemperatur (Tg) und Schmelzwärme:
ISO-Norm 11357
Granulat
Die Differential Scanning Calorimetry (DSC) wurde mit einer Aufheizrate von 20 K/min durchgeführt. Der Mittelpunkt des Glasübergangsbereichs, welcher als Glasübergangstemperatur (Tg) angegeben wird, wurde nach der Methode "Half height" ermittelt.

Wasseraufnahme:
ISO 62
Platte, Dicke 1 mm (100 x 100 mm)
Messtemperatur 23 °C
3 - 5 Platten werden 2880 Stunden in destilliertem Wasser gelagert und danach die Gewichtszunahme bestimmt. Der angegebene Wert stellt den arithmetischen Mittelwert der gemessenen Gewichtszunahmen (in Gew.-%) dar.

Lichttransmission und Haze:
ASTM D 1003
Platte, Dicke 2 mm (60 x 60 mm)
Messtemperatur 23 °C
Messgerät "Haze Gard plus" der Firma Byk Gardner mit CIE Lichtart C. Der Lichttransmissions- und der Haze-Wert werden in % der eingestrahlten Lichtmenge angegeben.

### Versuche:

Für die Versuche wurden aus den in der nachfolgenden Tabelle 1 aufgeführten Materialien verschiedene Polyamid-Formmassen compoundiert. Alle aufgeführten Materialien sind aufgrund ihrer amorphen Struktur transparent (RV = relative Viskosität).

**Tabelle 1: In den Beispielen und Vergleichsbeispielen verwendete Materialien**

| **Material** | **Beschreibung** | **Hersteller** |
|---|---|---|
| PA MACMI/12 | amorphes Polyamid MACMI/12 im Molverhältnis 65/35 aus Bis(3-methyl-4-amino-cyclohexyl) methan, Isophthalsäure und Laurinlactam RV 1,56 (gemessen mit 0,5 g in 100 ml m-Kresol bei 20 °C) Glasübergangstemperatur 160 °C | EMS-CHEMIE AG, Schweiz |
| PA 6I/6T/ MACMI/ MACMT/ PACMI/ PACMT/12 | amorphes Polyamid 6I/6T/MACMI/MACMT/PACMI/PACMT/12 aus 1,6-Hexandiamin (38,5 Mol-%), Bis(3-methyl-4-amino-cyclohexyl)methan (7,5 Mol-%), Bis(4-amino-cyclohexyl)methan (2,7 Mol-%), Isophthalsäure (24,3 Mol-%), Terephthalsäure (24,3 Mol-%) und Laurinlactam (2,7 Mol-%) RV 1,62 (gemessen mit 0,5 g in 100 ml m-Kresol bei 20 °C) Glasübergangstemperatur 159 °C | EMS-CHEMIE AG, Schweiz |
| PA MACM12 | amorphes Polyamid MACM12 aus Bis(3-methyl-4-amino-cyclohexyl)methan und Dodecandisäure RV 1,70 (gemessen mit 0,5 g in 100 ml m-Kresol bei 20 °C) Glasübergangstemperatur 155 °C | EMS-CHEMIE AG, Schweiz |
| PA MACMI/ MACMT/12 | amorphes Polyamid MACMI/MACMT/12 im Molverhältnis 38/38/24 aus Bis(3-methyl-4-aminocyclohexyl)methan, Isophthalsäure, Terephthalsäure und Laurinlactam RV 1,54 (gemessen mit 0,5 g in 100 ml m-Kresol bei 20 °C) Glasübergangstemperatur 190 °C | EMS-CHEMIE AG, Schweiz |
| Topas 5013 | amorphes Cycloolefin-Copolymer aus Ethen und Norbornen, mit Norbornen-Anteil ca. 49 Mol-% Glasübergangstemperatur 140 °C Fliessindex MVR (260 °C, 2.16 kg, ISO 1133) 48 ml/10 min | TOPAS Advanced Polymers GmbH, Deutschland |
| Topas 6015 | amorphes Cycloolefin-Copolymer aus Ethen und Norbornen, mit Norbornen-Anteil ca. 54 Mol-% Glasübergangstemperatur 160 °C Fliessindex MVR (260 °C, 2.16 kg, ISO 1133) 4 ml/10 min | TOPAS Advanced Polymers GmbH, Deutschland |
| Topas 6017 | amorphes Cycloolefin-Copolymer aus Ethen und Norbornen, mit Norbornen-Anteil ca. 63 Mol-% Glasübergangstemperatur 195 °C Fliessindex MVR (260 °C, 2.16 kg, ISO 1133) 1.5 ml/10 min | TOPAS Advanced Polymers GmbH, Deutschland |
| Topas 8007 | amorphes Cycloolefin-Copolymer aus Ethen und Norbornen, mit Norbornen-Anteil ca. 36 Mol-% Glasübergangstemperatur 80 °C Fliessindex MVR (260 °C, 2.16 kg, ISO 1133) 32 ml/10 min | TOPAS Advanced Polymers GmbH, Deutschland |

| Fortsetzung von Tabelle 1: | | |
|---|---|---|
| **Material** | **Beschreibung** | **Hersteller** |
| Apel APL6015T | amorphes Cycloolefin-Copolymer aus Ethen und Cycloolefin, mit Cycloolefin-Anteil ca. 43 Mol-% Glasübergangstemperatur 145 °C Fliessindex MVR (260 °C, 2.16 kg, ISO 1133) 9.6 ml/10 min | Mitsui Chemicals Inc., Japan |

Die Zusammensetzungen der Polyamid-Formmassen der Beispiele und Vergleichsbeispiele sowie die Resultate der Messungen an den Prüfkörpern sind in den nachfolgenden Tabellen 2, 3 und 4 angegeben. Die Mengenanteile der Komponenten sind in Gewichtsprozent (Gew.-%) angegeben. Die Summe der eingesetzten Komponenten betrug jeweils 100 Gew.-%, entsprechend dem Gesamtgewicht der Polyamid-Formmasse.

**Tabelle 2: Zusammensetzungen und Messwerte mit PA MACMI/12**

| | **Einheit** | **Beispiele** | | | | | | **Vergleichsbeispiel** |
|---|---|---|---|---|---|---|---|---|
| | | **1** | **2** | **3** | **4** | **5** | **6** | **7** |
| **PA MACMI/12** | Gew.-% | 80 | 92.6 | 80 | 92.6 | 80 | - | 80 |
| **PA MACMI/ MACMT/12** | Gew.-% | - | - | - | - | - | 88 | - |
| **Topas 5013** | Gew.-% | 20 | - | - | - | - | - | - |
| **Topas 6015** | Gew.-% | - | 7.4 | 20 | - | - | - | - |
| **Topas 6017** | Gew.-% | - | - | - | 7.4 | 20 | - | - |
| **Apel APL6015T** | Gew.-% | - | - | - | - | - | 12 | - |
| **Topas 8007** | Gew.-% | - | - | - | - | - | - | 20 |
| **Wasseraufnahme (23 °C / Wasser / 2880 h)** | Gew.-% | 3.1 | 3.7 | 3.2 | 3.7 | 3.1 | 3.5 | 3.1 |
| **Lichttransmission** | % | 90.8 | 91.5 | 91.3 | 92.1 | 90.7 | 92.3 | 84.2 |
| **Haze** | % | 18 | 8 | 10 | 3 | 11 | 4 | 55 |

Für die erfindungsgemässen Beispiele 1 bis 5 der Tabelle 2 wurde ein Copolyamid PA MACMI/12 als Komponente (A) verwendet. Als Komponente (B) (Cycloolefin-Copolymer) wurden Norbornen/Ethen-Copolymere mit unterschiedlichem Norbornen-Anteil eingesetzt (Topas-Typen, vgl. auch Tabelle 1). Die Beispiele 1 bis 5 zeigen sehr gute optische Eigenschaften sowohl bei der Lichttransmission als auch beim Haze, und zudem gegenüber dem unmodifizierten PA MACMI/12, dessen Wasseraufnahme 4.0 Gew.-% beträgt, eine verringerte Wasseraufnahme.

Das erfindungsgemässe Beispiel 6 mit einem anderen amorphen Polyamid (A), dessen Wasseraufnahme unmodifiziert 4 Gew.-% beträgt, und einem anderen geeigneten Cycloolefin-Copolymer (B) zeigt ebenfalls sehr gute optische Eigenschaften.

Aus Tabelle 2 geht zudem hervor, dass nicht jedes Cycloolefin-Copolymer für die vorliegende Erfindung geeignet ist. Das Vergleichsbeispiel 7 mit Topas 8007 als Norbornen/Ethen-Copolymer (ca. 36 Mol-% Norbornen, vgl. Tabelle 1) zeigt wegen des zu niedrigen Cycloolefin-Anteils mit einem Haze von 55 % eine zu hohe Trübung.

**Tabelle 3: Zusammensetzungen und Messwerte von Vergleichsbeispielen mit PA 6I/6T/MACMI/MACMT/PACMI/PACMT/12, enthaltend Hexamethylendiamin**

| | **Einheit** | **Vergleichsbeispiele** | | | | | | | |
|---|---|---|---|---|---|---|---|---|---|
| | | **8** | **9** | **10** | **11** | **12** | **13** | **14** | **15** |
| **PA 6I/6T/MACMI/ MACMT/PACMI/ PACMT/12** | Gew.-% | 92.6 | 80 | 92.6 | 80 | 92.6 | 80 | 92.6 | 80 |
| **Topas 5013** | Gew.-% | 7.4 | 20 | - | - | - | - | - | - |
| **Topas 6015** | Gew.-% | - | - | 7.4 | 20 | - | - | - | - |
| **Topas 6017** | Gew.-% | - | - | - | - | 7.4 | 20 | - | - |
| **Topas 8007** | Gew.-% | - | - | - | - | - | - | 7.4 | 20 |
| **Wasseraufnahme (23 °C/Wasser/ 2880 h)** | Gew.-% | 8.0 | 6.9 | 7.9 | 7.1 | 8.0 | 7.0 | 8.1 | 6.9 |
| **Lichttransmission** | % | 50.4 | 40.9 | 48.9 | 39.3 | 48.4 | 38.2 | 48.2 | 38.2 |
| **Haze** | % | 100 | 100 | 100 | 100 | 100 | 100 | 100 | 100 |

Mit dem PA 6I/6T/MACMI/MACMT/PACMI/PACMT/12 (enthaltend Hexamethylendiamin) liegt die Lichttransmission bei den Vergleichsbeispielen 8 bis 15 nur zwischen ca. 40 und 50 %, und mit einem Haze von 100 % sind diese Mischungen vollkommen trüb. Solche Polyamid-Formmassen sind ungeeignet für Anwendungen, bei denen die optischen Eigenschaften Lichttransmission und Haze wichtig sind.

Die Versuche der Tabellen 2 und 3 zeigen eindrücklich auf, dass beide Komponenten (A) und (B) geeignet sein müssen, damit die erfindungsgemäss guten optischen Eigenschaften erreicht werden. Die Wasseraufnahme des unmodifizierten PA 6I/6T/MACMI/MACMT/PACMI/PACMT/12 beträgt 8.8 Gew.-%. PACM steht in dieser Kurzschreibweise für Bis(4-amino-cyclohexyl)methan.

**Tabelle 4: Zusammensetzungen und Messwerte von Vergleichsbeispielen mit PA MACM12**

| | **Einheit** | **Vergleichsbeispiele** | | | |
|---|---|---|---|---|---|
| | | **16** | **17** | **18** | **19** |
| **PA MACM12** | Gew.-% | 95 | 92.6 | 95 | 92.6 |
| **Topas 6015** | Gew.-% | 5 | 7.4 | - | - |
| **Topas 6017** | Gew.-% | - | - | 5 | 7.4 |
| **Wasseraufnahme (23 °C / Wasser / 2880 h)** | Gew.-% | 2.8 | 2.8 | 2.9 | 2.7 |
| **Lichttransmission** | % | 73.7 | 69.6 | 74.6 | 70.5 |
| **Haze** | % | 53 | 70 | 58 | 80 |

Die Vergleichsbeispiele 16 bis 19 von Tabelle 4 mit Polyamid PA MACM12 zeigen nur eine geringe Lichttransmission zwischen 70 und 75 % und einen hohen Haze von 50 bis 80 %. Solche Polyamid-Formmassen sind ungeeignet für Anwendungen bei denen die optischen Eigenschaften Lichttransmission und Haze wichtig sind. Die Wasseraufnahme des unmodifizierten PA MACM12 beträgt 3.0 Gew.-%.

Die Beispiele und Vergleichsbeispiele der durchgeführten Versuche sind eine gute Illustration und Stütze für die Merkmale und Grenzen des Anspruchs 1. Mit der vorliegenden Erfindung können Polyamid-COC-Mischungen zur Verfügung gestellt werden, die die Anforderungen gute optische Eigenschaften und reduzierte Wasseraufnahme gleichzeitig erfüllen.

## Patentansprüche

1. Polyamid-Formmasse enthaltend mindestens ein Cycloolefin-Copolymer,
**dadurch gekennzeichnet, dass** diese Polyamid-Formmasse umfasst:
(A) 55 bis 99 Gew.-% mindestens eines amorphen Polyamids;
(B) 1 bis 30 Gew.-% des mindestens einen Cycloolefin-Copolymers, wobei bei dem mindestens einen Cycloolefin-Copolymer (B) der Cycloolefin-Anteil mehr als 40 Mol-% beträgt; und
(C) 0 bis 15 Gew.-% mindestens eines Zusatzstoffs;
wobei die Summe der Komponenten (A) bis (C) 100 Gew.-% der Polyamid-Formmasse beträgt;
wobei diese Polyamid-Formmasse eine Lichttransmission gemessen nach der Norm ASTM D 1003 aufweist, die mindestens 80 % beträgt;
und wobei die Polyamid-Formmasse einen Haze gemessen nach der Norm ASTM D 1003 aufweist, der maximal 30 % beträgt.

2. Polyamid-Formmasse gemäss Anspruch 1, **dadurch gekennzeichnet, dass** die Komponenten (A) und (B) in einem Anteil von:
(A) 60 bis 97 Gew.-% und (B) 3 bis 25 Gew.-%;
bevorzugt von:
(A) 62 bis 96 Gew.-% und (B) 4 bis 23 Gew.-%;
und besonders bevorzugt von:
(A) 72 bis 96 Gew.-% und (B) 4 bis 13 Gew.-% vorliegen.

3. Polyamid-Formmasse gemäss Anspruch 1 oder 2, **dadurch gekennzeichnet, dass** das mindestens eine amorphe Polyamid (A) mindestens ein cycloaliphatisches Diamin enthält.

4. Polyamid-Formmasse gemäss Anspruch 3, **dadurch gekennzeichnet, dass** das mindestens eine cycloaliphatische Diamin ausgewählt ist aus einer Gruppe die aus Bis(aminocyclohexyl)methan und seinen Alkylderivaten besteht.

5. Polyamid-Formmasse gemäss Anspruch 3 oder 4, **dadurch gekennzeichnet, dass** das mindestens eine cycloaliphatische Diamin ausgewählt ist aus einer Gruppe die aus Bis(4-amino-cyclohexyl)methan, Bis(3-methyl-4-aminocyclohexyl)methan und Bis(3,5-dimethyl-4-amino-cyclohexyl)methan besteht.

6. Polyamid-Formmasse gemäss einem der vorhergehenden Ansprüche, **dadurch gekennzeichnet, dass** bei dem mindestens einen amorphem Polyamid (A) Hexamethylendiamin als Monomer ausgeschlossen ist.

7. Polyamid-Formmasse gemäss einem der vorhergehenden Ansprüche, **dadurch gekennzeichnet, dass** das mindestens eine amorphe Polyamid (A) mindestens ein amorphes Copolyamid (A) ist.

8. Polyamid-Formmasse gemäss Anspruch 7, **dadurch gekennzeichnet, dass** das mindestens eine amorphe Copolyamid (A) ein Copolyamid enthaltend Bis(3-methyl-4-amino-cyclohexyl)methan und Isophthalsäure ist.

9. Polyamid-Formmasse gemäss Anspruch 8, **dadurch gekennzeichnet, dass** das mindestens eine amorphe Copolyamid (A) ein Copolyamid aus Bis(3-methyl-4-amino-cyclohexyl)methan, Isophthalsäure und Laurinlactam ist.

10. Polyamid-Formmasse gemäss Anspruch 8, **dadurch gekennzeichnet, dass** das mindestens eine amorphe Copolyamid (A) ein Copolyamid aus Bis(3-methyl-4-amino-cyclohexyl)methan, Isophthalsäure, Terephthalsäure und Laurinlactam ist.

11. Polyamid-Formmasse gemäss einem der Ansprüche 7 bis 10, **dadurch gekennzeichnet, dass** das amorphe Copolyamid (A) Laurinlactam enthält und einen Laurinlactam-Gehalt aufweist, der 10 bis 45 Mol-%, bevorzugt 15 bis 40 Mol-%, besonders bevorzugt 20 bis 40 Mol-%, bezogen auf die molare Summe aller Monomeren, beträgt.

12. Polyamid-Formmasse gemäss einem der vorhergehenden Ansprüche, **dadurch gekennzeichnet, dass** das mindestens eine Cycloolefin-Copolymer (B) einen Cycloolefin-Anteil von 43 bis 75 Mol-%, bevorzugt von 47 bis 70 Mol-%, besonders bevorzugt von 52 bis 68 Mol-% aufweist.

13. Polyamid-Formmasse gemäss einem der vorhergehenden Ansprüche, **dadurch gekennzeichnet, dass** das mindestens eine Cycloolefin-Copolymer (B) eine Glasübergangstemperatur aufweist, die höher als 100 °C ist, bevorzugt im Bereich von 110 °C bis 220 °C und besonders bevorzugt im Bereich von 120 °C bis 210 °C liegt.

14. Polyamid-Formmasse gemäss einem der vorhergehenden Ansprüche, **dadurch gekennzeichnet, dass** das mindestens eine Cycloolefin-Copolymer (B) aus Norbornen und/oder Norbornenderivaten und Ethen besteht.

15. Polyamid-Formmasse gemäss einem der vorhergehenden Ansprüche, **dadurch gekennzeichnet, dass** der Anteil des mindestens einen Zusatzstoffes (C) 0.1 bis 6 Gew.-%, besonders bevorzugt 0.1 bis 4 Gew.-% beträgt.

16. Polyamid-Formmasse gemäss einem der vorhergehenden Ansprüche, **dadurch gekennzeichnet, dass** der mindestens eine Zusatzstoff (C) ausgewählt ist aus der Gruppe bestehend aus Stabilisatoren, Gleitmitteln, Farbstoffen, Markierungsstoffen, Verträglichkeitsvermittlern, anorganischen Pigmenten, organischen Pigmenten, Antistatika, Antiblockmitteln, Trennmitteln, Entformungsmitteln, optischen Aufhellern, photochromen Additiven, halogenfreien Flammschutzmitteln, metallischen Pigmenten, Metallflittern, metallbeschichteten Partikeln, Füllstoffen, nanoskaligen Füllstoffen und Mischungen davon.

17. Polyamid-Formmasse gemäss Anspruch 16, **dadurch gekennzeichnet, dass** es sich bei dem mindestens einen Zusatzstoff (C) um einen Stabilisator handelt.

18. Polyamid-Formmasse gemäss Anspruch 9 oder 10, **dadurch gekennzeichnet, dass** diese eine Wasseraufnahme gemessen an Platten nach der ISO-Norm 62 von weniger als 4 Gew.-% zeigt.

19. Polyamid-Formmasse gemäss einem der vorhergehenden Ansprüche, **dadurch gekennzeichnet, dass** diese gemessen nach der Norm ASTM D 1003 eine Lichttransmission aufweist, die mindestens 85 %, bevorzugt mindestens 88 %, und besonders bevorzugt mindestens 90 % beträgt.

20. Polyamid-Formmasse gemäss einem der vorhergehenden Ansprüche, **dadurch gekennzeichnet, dass** diese gemessen nach der Norm ASTM D 1003 einen Haze aufweist, der maximal 25 %, bevorzugt maximal 20 %, und besonders bevorzugt maximal 15 % beträgt.

21. Verwendung einer Polyamid-Formmasse nach einem der vorhergehenden Ansprüche für Beschichtungen von Objekten oder zur Herstellung von Formkörpern.

## Claims

1. Polyamide moulding material containing at least one cycloolefin copolymer, **characterized in that** said polyamide moulding material comprises:
(A) 55 to 99 wt% of at least one amorphous polyamide;
(B) 1 to 30 wt% of the at least one cycloolefin copolymer, wherein the amount of cycloolefin in the at least one cycloolefin copolymer (B) is more than 40 mol%; and
(C) 0 to 15 wt% of at least one additive;
wherein the sum of the components (A) to (C) is 100 wt% of the polyamide moulding material;
wherein said polyamide moulding material has a light transmission of at least 80%, measured according to the standard ASTM D 1003;
and wherein the polyamide moulding material has a haze of at most 30%, measured according to the standard ASTM D 1003.

2. Polyamide moulding material according to claim 1, **characterized in that** the components (A) and (B) are present in a proportion of:
(A) 60 to 97 wt% and (B) 3 to 25 wt%;
preferably:
(A) 62 to 96 wt% and (B) 4 to 23 wt%;
and particularly preferably:
(A) 72 to 96 wt% and (B) 4 to 13 wt%.

3. Polyamide moulding material according to claim 1 or 2, **characterized in that** the at least one amorphous polyamide (A) contains at least one cycloaliphatic diamine.

4. Polyamide moulding material according to claim 3, **characterized in that** the at least one cycloaliphatic diamine is selected from a group consisting of bis(aminocyclohexyl)methane and alkyl derivatives thereof.

5. Polyamide moulding material according to claim 3 or 4, **characterized in that** the at least one cycloaliphatic diamine is selected from a group consisting of bis(4-aminocyclohexyl)methane, bis(3-methyl-4-aminocyclohexyl)methane and bis(3,5-dimethyl-4-aminocyclohexyl)methane.

6. Polyamide moulding material according to one of the preceding claims, **characterized in that**, in the at least one amorphous polyamide (A), hexamethylenediamine is excluded as a monomer.

7. Polyamide moulding material according to one of the preceding claims, **characterized in that** the at least one amorphous polyamide (A) is at least one amorphous copolyamide (A).

8. Polyamide moulding material according to claim 7, **characterized in that** the at least one amorphous copolyamide (A) is a copolyamide containing bis(3-methyl-4-aminocyclohexyl)methane and isophthalic acid.

9. Polyamide moulding material according to claim 8, **characterized in that** the at least one amorphous copolyamide (A) is a copolyamide composed of bis(3-methyl-4-aminocyclohexyl)methane, isophthalic acid and laurolactam.

10. Polyamide moulding material according to claim 8, **characterized in that** the at least one amorphous copolyamide (A) is a copolyamide composed of bis(3-methyl-4-aminocyclohexyl)methane, isophthalic acid, terephthalic acid and laurolactam.

11. Polyamide moulding material according to one of claims 7 to 10, **characterized in that** the amorphous copolyamide (A) contains laurolactam and has a laurolactam content of 10 to 45 mol%, preferably 15 to 40 mol%, particularly preferably 20 to 40 mol%, relative to the molar sum of all monomers.

12. Polyamide moulding material according to one of the preceding claims, **characterized in that** the at least one cycloolefin copolymer (B) has a cycloolefin content of 43 to 75 mol%, preferably 47 to 70 mol%, particularly preferably 52 to 68 mol%.

13. Polyamide moulding material according to one of the preceding claims, **characterized in that** the at least one cycloolefin copolymer (B) has a glass transition temperature which is higher than 100°C, preferably in the range from 110°C to 220°C, and particularly preferably in the range from 120°C to 210°C.

14. Polyamide moulding material according to one of the preceding claims, **characterized in that** the at least one cycloolefin copolymer (B) consists of norbornene and/or norbornene derivatives and ethene.

15. Polyamide moulding material according to one of the preceding claims, **characterized in that** the proportion of the at least one additive (C) is 0.1 to 6 wt%, particularly preferably 0.1 to 4 wt%.

16. Polyamide moulding material according to one of the preceding claims, **characterized in that** the at least one additive (C) is selected from the group consisting of stabilizers, lubricants, dyes, marking substances, compatibilizers, inorganic pigments, organic pigments, antistatics, antiblocking agents, release agents, demoulding agents, optical brighteners, photochromic additives, halogen-free flame retardants, metal pigments, metal flakes, metal-coated particles, fillers, nanoscale fillers, and mixtures thereof.

17. Polyamide moulding material according to claim 16, **characterized in that** the at least one additive (C) is a stabilizer.

18. Polyamide moulding material according to claim 9 or 10, **characterized in that** it has a water absorption of less than 4 wt%, measured on plates according to ISO Standard 62.

19. Polyamide moulding material according to one of the preceding claims, **characterized in that** it has a light transmission of at least 85%, preferably at least 88%, and particularly preferably at least 90%, measured according to the standard ASTM D 1003.

20. Polyamide moulding material according to one of the preceding claims, **characterized in that** it has a haze of at most 25%, preferably at most 20%, and particularly preferably at most 15%, measured according to the standard ASTM D 1003.

21. Use of a polyamide moulding material according to one of the preceding claims for coatings of objects or for producing moulded articles.

## Revendications

1. Matière à mouler en polyamide comprenant au moins un copolymère cyclooléfine, **caractérisée en ce que** cette matière à mouler en polyamide comprend :
(A) de 55 à 99 % en poids au moins d'un polyamide amorphe ;
(B) de 1 à 30 % en poids du au moins un copolymère cyclooléfine, la part de cyclooléfine dans le au moins un copolymère cyclooléfine (B) étant de plus de 40 % en moles ; et
(C) de 0 à 15 % en poids au moins d'un adjuvant ;
la somme des composants (A) à (C) étant égale à 100 % de la matière à mouler en polyamide ;
cette matière à mouler en polyamide présentant une transmission lumineuse, mesurée conformément à la norme ASTM D 1003, égale à au moins 80 % ;
et la matière à mouler en polyamide présentant un trouble, mesuré conformément à la norme ASTM D 1003, égal à maximum 30 %.

2. Matière à mouler en polyamide selon la revendication 1, **caractérisée en ce que** les composants (A) et (B) sont présents à raison de :
(A) 60 à 97 % en poids et (B) 3 à 25 % en poids ;
de préférence à raison de :
(A) 62 à 96 % en poids et (B) 4 à 23 % en poids ;
et de façon particulièrement préférée à raison de :
(A) 72 à 96 % en poids et (B) 4 à 13 % en poids.

3. Matière à mouler en polyamide selon la revendication 1 ou 2, **caractérisée en ce que** le au moins un polyamide amorphe (A) contient au moins une diamine cycloaliphatique.

4. Matière à mouler en polyamide selon la revendication 3, **caractérisée en ce que** la au moins une diamine cycloaliphatique est choisie à partir d'un groupe composé de Bis(aminocyclohexyl)méthane et ses dérivés alkylés.

5. Matière à mouler en polyamide selon la revendication 3 ou 4, **caractérisée en ce que** la au moins une diamine cycloaliphatique est choisie à partir d'un groupe composé de Bis(4-amino-cyclohexyl)méthane, Bis(3-méthyl-4-amino-cyclohexyl)méthane et Bis(3,5-diméthyl-4-amino-cyclohexyl)méthane.

6. Matière à mouler en polyamide selon l'une des revendications précédentes, **caractérisée en ce qu'**au niveau du au moins un polyamide amorphe (A) l'hexaméthylènediamine est exclue en tant que monomère.

7. Matière à mouler en polyamide selon l'une des revendications précédentes, **caractérisée en ce que** le au moins un polyamide amorphe (A) est au moins un copolyamide amorphe (A).

8. Matière à mouler en polyamide selon la revendication 7, **caractérisée en ce que** le au moins un copolyamide amorphe (A) est un copolyamide contenant Bis(3-méthyl-4-amino-cyclohexyl)méthane et de l'acide isophtalique.

9. Matière à mouler en polyamide selon la revendication 8, **caractérisée en ce que** le au moins un copolyamide amorphe (A) est un copolyamide de Bis(3-méthyl-4-amino-cyclohexyl)méthane, d'acide isophtalique et de laurine-lactame.

10. Matière à mouler en polyamide selon la revendication 8, **caractérisée en ce que** le au moins un copolyamide amorphe (A) est un copolyamide de Bis(3-méthyl-4-amino-cyclohexyl)méthane, d'acide isophtalique, d'acide téréphtalique et de laurine-lactame.

11. Matière à mouler en polyamide selon l'une des revendications 7 à 10, **caractérisée en ce que** le copolyamide amorphe (A) contient du laurine-lactame et présente une teneur en laurine-lactame comprise entre 10 et 45 % en moles, de préférence entre 15 et 40 % en moles, de façon particulièrement préférée entre 20 et 40 % en moles rapportée à la somme molaire de tous les monomères.

12. Matière à mouler en polyamide selon l'une des revendications précédentes, **caractérisée en ce que** le au moins un copolymère cyclooléfine (B) présente une part de cyclooléfine de 43 à 75 % en moles, de préférence de 47 à 70 % en moles, et de façon particulièrement préférée de 52 à 68 % en moles.

13. Matière à mouler en polyamide selon l'une des revendications précédentes, **caractérisée en ce que** le au moins un copolymère cyclooléfine (B) présente une température de transition vitreuse supérieure à 100 °C, de préférence comprise dans la plage allant de 110 °C à 220 °C, et de façon particulièrement préférée dans la plage allant de 120 °C à 210 °C.

14. Matière à mouler en polyamide selon l'une des revendications précédentes, **caractérisée en ce que** le au moins un copolymère cyclooléfine (B) est composé de norbornène et/ou de dérivés de norbornène et d'éthène.

15. Matière à mouler en polyamide selon l'une des revendications précédentes, **caractérisée en ce que** la part du au moins un adjuvant (C) est comprise entre 0,1 et 6 % en poids, de façon particulièrement préférée entre 0,1 et 4 % en poids.

16. Matière à mouler en polyamide selon l'une des revendications précédentes, **caractérisée en ce que** le au moins un adjuvant (C) est choisi à partir du groupe composé de stabilisateurs, lubrifiants, colorants, marqueurs, agents de compatibilité, pigments anorganiques, pigments organiques, agents antistatiques, agents anti-bloquants, agents de séparation, agents de démoulage, agents d'azurage optiques, additifs photochromiques, agents d'ignifugation non halogénés, pigments métalliques, paillettes de métal, particules métallisées, agents de charge, matières de remplissage nanométriques et des mélanges de ces derniers.

17. Matière à mouler en polyamide selon la revendication 16, **caractérisée en ce que** le au moins un adjuvant (C) est un stabilisateur.

18. Matière à mouler en polyamide selon la revendication 9 ou 10, **caractérisée en ce qu'**elle montre une absorption d'eau inférieure à 4 % en poids, mesurée sur des plaques conformément à la norme ISO 62.

19. Matière à mouler en polyamide selon l'une des revendications précédentes, **caractérisée en ce qu'**elle présente une transmission lumineuse, mesurée conformément à la norme ASTM D 1003, d'au moins 85 %, de préférence d'au moins 88 % et de façon particulièrement préférée d'au moins 90 %.

20. Matière à mouler en polyamide selon l'une des revendications précédentes, **caractérisée en ce qu'**elle présente un trouble, mesuré conformément à la norme ASTM D 1003, de maximum 25 %, de préférence de maximum 20 % et de façon particulièrement préférée de maximum 15 %.

21. Utilisation d'une matière à mouler en polyamide selon l'une des revendications précédentes pour recouvrir des objets d'une couche ou pour fabriquer des corps moulés.
